# EUROPÄISCHE PATENTSCHRIFT

(11) **EP 3 459 818 B1**
(45) Veröffentlichungstag und Bekanntmachung des Hinweises auf die Patenterteilung: **22.04.2020**
(21) Anmeldenummer: 18194154.3
(22) Anmeldetag: 13.09.2018
(51) Int. Cl.: B62B 17/08

(54) **HANDBREMSE FÜR SCHLITTEN**
HAND BRAKE FOR SLEDS
FREIN À MAIN POUR LUGES

(30) Priorität: 22.09.2017 AT 80072018
(43) Veröffentlichungstag der Anmeldung: 27.03.2019
(73) Patentinhaber: Ferner, Reinhard, 8822 Mühlen (AT)
(72) Erfinder: Ferner, Reinhard, 8822 Mühlen (AT)
(74) Vertreter: Röggla, Harald

(56) Entgegenhaltungen:
- EP-A1- 3 290 291
- FR-A1- 2 885 867
- US-A- 441 167

## Beschreibung

Die Erfindung betrifft eine Handbremse für einen Schlitten mit einem Handbremshebel, einer Drehachse, einer Bremskralle und zumindest einer starr mit dem Schlitten verbindbaren Lagerplatte, wobei der Handbremshebel mit der Drehachse und der Bremskralle verbunden ist und die Drehachse an der Lagerplatte drehbar gelagert ist. Eine derartige Handbremse wird von der US 441,167 A gezeigt.

Handbremsen werden an Schlitten eingesetzt um die Geschwindigkeit während der Schlittenfahrt zu kontrollieren und den Schlitten bei Bedarf zum Stillstand zu bringen. Die Ausstattung von Schlitten mit Handbremsen reduziert die Unfallwahrscheinlichkeit und das Risiko von Verletzungen für einen Schlittenfahrer, da die Handbremse die Möglichkeit bereitstellt die Schlittenfahrt effektiver und sicherer kontrollieren, als dies mit reinem Körpereinsatz des Schlittenfahrers, beispielsweise durch Bremsvorgänge mit den Füßen, möglich ist. Bei einer Betätigung der Handbremse führt die Handbremse eine Drehbewegung um die Drehachse aus, wobei die Bremskralle in die Fahrbahn eingreift, auf welcher der Schlitten gleitet. Durch die hierbei entstehenden Reibungskräfte wird der Schlitten verlangsamt oder zum Stillstand gebracht.

Aus dem Stand der Technik sind Handbremsen für Schlitten bekannt, welche Drehachsen in Form von durchgehenden Rohren aufweisen. Diese Form der Drehachse birgt den Nachteil, dass eine feste, belastungsfähige und langzeitstabile Verbindung zwischen der Drehachse und dem Handbremshebel nur mittels aufwendiger Fertigungsmethoden sichergestellt werden kann. Beispielsweise können die Drehachse und der Handbremsenhebel miteinander verschweißt werden. Qualitativ hochwertige Schweißnähte, welche den an den Schweißstellen auftretenden Belastungen widerstehen können, erfordern geschultes Personal und sind mit zeitaufwändigen Vorbereitungsarbeiten verbunden. Des Weiteren müssen die Oberflächen der Schweißnähte nachbehandelt werden. Der für diesen Bearbeitungsschritt notwendige Zeitaufwand hält sich im gleichen Rahmen wie jener für den Schweißprozess selbst, insbesondere bei Edelstahl-Schweißverbindungen. Eine Alternative zu Schweißverbindungen stellen Schraubverbindungen zwischen Drehachse und Handbremshebel dar, wobei diese jedoch schwer zu realisieren sind. Ein Nachteil dieser Verbindungsmethode besteht darin, dass die notwendigen Bohrungen für die Schraubverbindungen die Querschnitte der Drehachse und des Handbremshebels erheblich schwächen. Des Weiteren weisen Rundrohre keine geraden Flächen auf, die aber für eine sichere und verlässliche Schraubverbindung notwendig sind.

Um sicherzustellen, dass die Handbremse für den Schlittenfahrer stets griffbereit ist, muss der Schwenkbereich der Handbremse eingeschränkt werden. Zumindest sollte der Handbremshebel, in einem unbetätigten Zustand der Handbremse, in Höhe einer Sitzfläche des Schlittens verweilen. Handbremsen gemäß dem Stand der Technik weisen den Nachteil auf, dass der Schwenkbereich der Handbremsen nur mit aufwendigen Anschlagkonstruktionen am Schlitten eingeschränkt werden kann. Des Weiteren sind durch die feste Verbindung zwischen Drehachse und Handbremshebel keine Einstellmöglichkeiten gegeben. Ein weiterer Nachteil des Standes der Technik besteht darin, dass die Eingriffstiefe der Bremskralle nicht nachträglich verändert werden kann. Diese Nachteile erschweren den Eintritt von Handbremsen an Schlitten in den Massenmarkt, und komplizieren oder verhindern eine Nachrüstbarkeit von Handbremsen gemäß dem Stand der Technik an bestehenden Schlitten.

Es ist die Aufgabe der vorliegenden Erfindung eine Handbremse zu schaffen, welche die Nachteile des Standes der Technik überwindet.

Erfindungsgemäß wird die vorliegende Aufgabe dadurch gelöst, dass die Lagerplatte eine Durchgangsöffnung mit einem in die Durchgangsöffnung ragenden Anschlag aufweist, wobei die Drehachse in der Durchgangsöffnung aufgenommen ist und der Anschlag an der Drehachse in einer vorzugsweise entgegen einer Betätigungsrichtung der Handbremse gerichteten Drehbewegung der Drehachse anschlägt.

Durch die erfindungsgemäße Ausgestaltung der Handbremse wird der Vorteil erreicht, dass der Anschlag der Handbremse vorzugsweise für eine Bewegung entgegen der Betätigungsrichtung durch die Ausformung der Durchgangsöffnung der Lagerplatte realisiert wird, wodurch kein gesonderter Anschlagsmechanismus am Schlitten vorgesehen werden muss. Hierdurch wird eine Einschränkung des Schwenkbereichs der Handbremse entgegen der Betätigungsrichtung ohne konstruktive Veränderungen am Schlitten selbst realisiert. Hierdurch eignet sich die erfindungsgemäße Handbremse zudem insbesondere zur Nachrüstung an einem bestehenden Schlitten ohne Handbremse. Der Anschlag der Handbremse kann auch genutzt werden um den Schwenkbereich in Betätigungsrichtung einzuschränken, falls die Handbremse nicht zuvor an einem Anschlagsbereich an dem Schlitten selbst anschlägt, welcher diesen begrenzt.

Gemäß der bevorzugten Ausführungsform der Handbremse wird der Handbremshebel zudem mittels einer Rohrschelle an der Drehachse kraftschlüssig fixiert. Hierdurch wird der Vorteil erreicht, dass der Handbremshebel entlang der Rodel in verschiedenen Positionen fixiert werden kann, wodurch die Eingriffstiefe auch nachträglich verändert werden kann. Besonders vorteilhaft ist, dass hierdurch auch eine Anpassung der erfindungsgemäßen Handbremse an unterschiedliche Schlitten vorgenommen werden kann.

Vorteilhafte Ausgestaltungen der erfindungsgemäßen Handbremse werden in weiterer Folge anhand der Figuren näher erläutert.
Figur 1 zeigt einen Schlitten mit einer erfindungsgemäßen Handbremse in einer Ansicht von unten.
Figur 2 zeigt den Schlitten gemäß Figur 1 in einer Seitenansicht.
Figur 3 zeigt eine Detaildarstellung einer Lagerplatte der erfindungsgemäßen Handbremse mit einer Durchgangsöffnung und einer darin aufgenommenen Drehachse.
Figur 4 zeigt einen Abschnitt der Drehachse der erfindungsgemäßen Handbremse in einer bevorzugten Ausführungsvariante.
Figur 5 zeigt eine alternative Ausführungsvariante der Drehachse der erfindungsgemäßen Handbremse.
Figur 6a, Figur 6b und Figur 6c zeigen die Drehachse gemäß der in Figur 5 dargestellten Ausführungsvariante mit einer Lagerplatte.
Figur 7 zeigt den Schlitten gemäß Figur 1 und Figur 2 ein einer Schnittdarstellung normal auf eine Fahrtrichtung des Schlittens.
Figur 8 zeigt eine weitere Ausführungsvariante der Durchgangsöffnung der Lagerplatte und der darin aufgenommenen Drehachse.

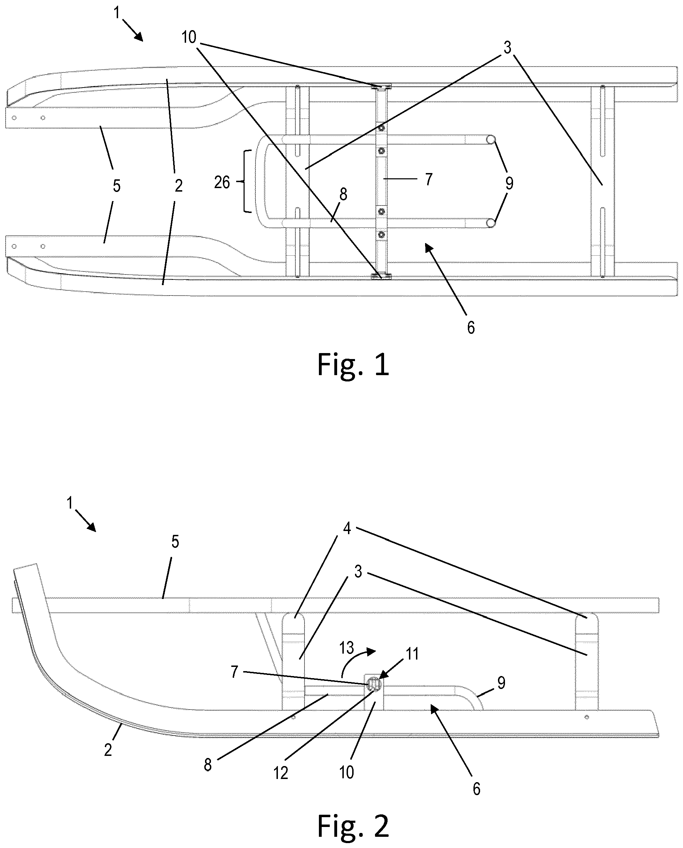

Figur 1 zeigt einen handelsüblichen Schlitten 1 in einer Ansicht von unten mit zwei gebogenen Kufen 2. Des Weiteren umfasst der Schlitten 1 zwei Füße 3 und zwei normal zu einer Fahrtrichtung des Schlittens orientierte Querstreben 4, welche in Figur 2 dargestellt sind und in Figur 1 von den Füßen 3 verdeckt werden. Die Kufen 2 und die Querstreben 4 sind über die Füße 3 fest miteinander verbunden. Der Schlitten 1 weist, jeweils oberhalb der beiden Kufen 2, zwei Holme 5 auf, die auf den Querstreben 4, entlang der Fahrtrichtung, montiert sind. Die Querstreben 4 bilden mit den Holmen 5 die Basis für eine Sitzfläche, welche in den Figuren nicht dargestellt ist und in der Regel aus Sitzgurten gebildet und flexibel ausgeführt ist. An dem Schlitten 1 ist eine erfindungsgemäße Handbremse 6 befestigt, welche aus einer Drehachse 7, einem Handbremshebel 8, einer Bremskralle 9 und einer Lagerplatte 10 besteht, wobei die Lagerplatte 10 mit dem Schlitten 1 starr verbindbar ist. Die in Figur 1 dargestellte Ausführungsform der Handbremse 6 weist zwei Bremskrallen 9 und zwei Lagerplatten 10 auf. Der Handbremshebel 8 ist mit der Drehachse 7 und den Bremskrallen 9 verbunden. In Figur 1 sind die zwei Lagerplatten 10 mit dem Schlitten 1 starr verbunden. Diese starre Verbindung kann beispielsweise mittels Holzschrauben realisiert werden. Die Drehachse 7 ist an der Lagerplatte 10 drehbar gelagert.

Figur 2 zeigt den in Figur 1 dargestellten Schlitten 1 mit der erfindungsgemäßen Handbremse 6 in einer Seitenansicht, wobei die Lagerplatte 10 eine Durchgangsöffnung 11, mit einem in die Durchgangsöffnung 11 ragenden Anschlag 12 aufweist. Die Drehachse 7 ist zudem in der Durchgangsöffnung 11 aufgenommen.

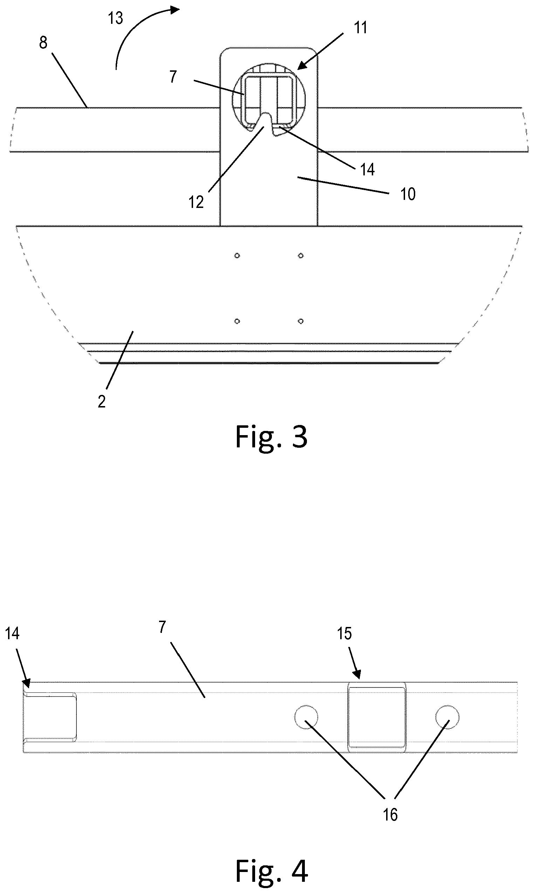

Figur 3 zeigt die Lagerplatte 10 mit der Durchgangsöffnung 11 in einer Detaildarstellung, wobei sichtbar ist, dass in einer entgegen einer Betätigungsrichtung 13 der Handbremse 6 gerichteten Drehbewegung der Anschlag 12 an der Drehachse 7 anschlägt. Die Drehachse 7 weist in der dargestellten, bevorzugten Ausführungsform der Handbremse 6 eine erste Ausnehmung 14 auf, in welche der Anschlag 12 eingreift. Bei einer Drehbewegung der Drehachse entgegen der Betätigungsrichtung 13 schlägt der Anschlag 12 an einer Seite der ersten Ausnehmung 14 an, wodurch die Drehbewegung begrenzt wird. Hierdurch wird der Vorteil erreicht, dass kein gesonderter Anschlag an dem Schlitten 1 angebracht werden muss um die Drehbewegung der Handbremse 6 zu begrenzen. Wird die Handbremse 6 betätigt, begrenzt der Anschlag 12 ebenfalls die Rotationsbewegung in Betätigungsrichtung 13 indem er an der gegenüberliegenden Seite der ersten Ausnehmung 14 der Drehachse 7 anschlägt.

In einer Ausführungsvariante des Schlittens 1 kann der Schlitten 1 auch einen Anschlagbereich aufweisen, welcher in den Figuren nicht dargestellt ist, wobei der Handbremshebel 8 an den Anschlagbereich bei der Betätigung der Handbremse 6 anschlägt, und der Schwenkbereich der Handbremse 6 somit begrenzt wird. Hierdurch wird der Vorteil erreicht, dass der Schwenkbereich der Handbremse 6 immer optimal an den jeweiligen Schlitten 1 angepasst ist. Des Weiteren kann der Anschlagbereich in der bevorzugten Ausführungsvariante auf einer normal zur Fahrtrichtung orientierten Querstrebe 4 angeordnet sein. Alternativ kann der Anschlagbereich auf einem Fuß 3 angeordnet sein. Hierdurch wird der Vorteil erreicht, dass der Anschlagbereich besonders stabil ausgeführt ist.

Figur 4 zeigt die Drehachse 7 der erfindungsgemäßen Handbremse 6 in der bevorzugten Ausführungsform. In dieser ist eine erste Ausnehmung 14 dargestellt, welche in der bevorzugten Ausführungsform der Handbremse 6 in Richtung eines Endes der Drehachse 7 geöffnet ist. Hierdurch werden fertigungstechnische Vorteile erreicht, indem die nachträgliche Montage der Handbremse 6 an dem Schlitten 1 vereinfacht wird, da die Drehachse 7 auf den Anschlag 12 aufgeschoben werden kann. Wird die Drehachse 7 an beiden Enden von einer Lagerplatte 10 aufgenommen wird hierdurch zudem eine axiale Verschiebung der Drehachse 7 verhindert, und die Drehachse 7 ohne zusätzliche Fixierungsvorrichtungen wie beispielsweise Seegeringe in axialer Richtung fixiert.

Wie in Figur 3 und Figur 4 dargestellt, weist die Drehachse 7 in der bevorzugten Ausführungsform einen im Wesentlichen viereckigen Querschnitt auf. Hierdurch wird eine besonders effektive Anschlagskonstruktion gewährleistet, und die Stabilität der Drehachse 7 erhöht. Des Weiteren weist die Drehachse 7 in Figur 4 eine zweite Ausnehmung 15 und zwei Bohrlöcher 16 auf, welche beiderseits der zweiten Ausnehmung 15 angeordnet sind. Gemäß einer Ausführungsvariante kann die Drehachse 7 auch einen im Wesentlichen kreisförmigen Querschnitt aufweisen.

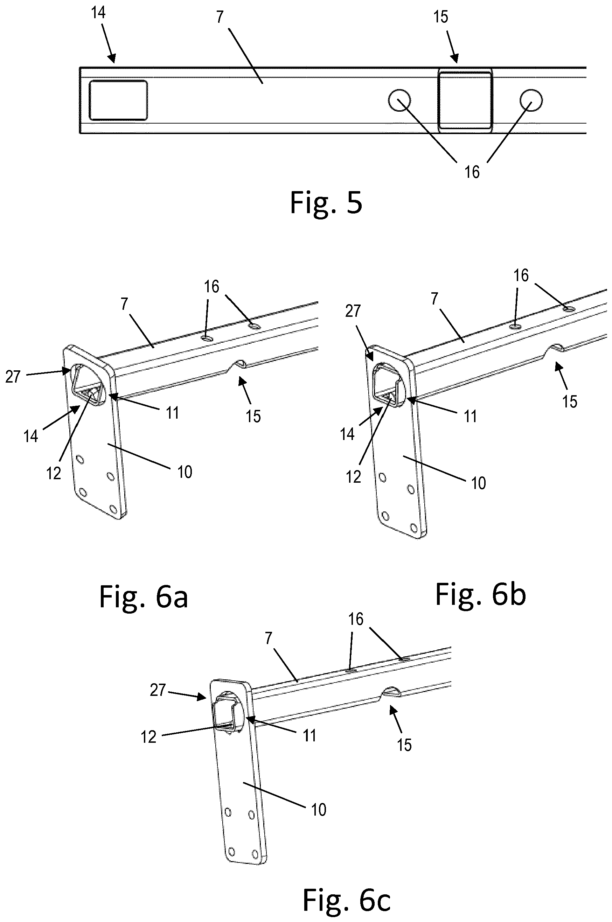

Figur 5 zeigt eine alternative Ausführungsvariante der Drehachse 7 der erfindungsgemäßen Handbremse 6. In dieser weist die erste Ausnehmung 14 einen geschlossenen Umfang auf, und ist von den Enden der Drehachse 7 beabstandet. Hierdurch wird der Vorteil erreicht, dass die Ausnehmung 14 der Drehachse 7 widerstandsfähiger gegenüber mechanischen Verformungen ist, welche aus hohen Kräften resultieren können und, welche über den Anschlag 12, beispielsweise wenn der Handbremshebel 8 entgegen der eigentlichen Bremsrichtung in Richtung der Fahrbahn missbräuchlich gedrückt wird, auf die Drehachse 7 übertragen werden.

Die Figuren 6a bis 6c zeigen perspektivische Darstellungen der Drehachse 7 in der in Figur 4 dargestellten Ausführungsvariante mit einer zusätzlichen Abfasung 27, welche an dem der Ausnehmung 14 nächstliegenden Ende der Drehachse 7 im Wesentlichen gegenüberliegend von der Ausnehmung 14 angeordnet ist. Die Figuren 6a bis 6c zeigen eine Abfolge von Montageschritten bei der Verbindung der Drehachse 7 mit der Lagerplatte 10. Die Abfasung 27 bietet den Vorteil, dass der Anschlag 12 wie in Figur 6a dargestellt, schräg in die Ausnehmung 14 eingebracht, und die Lagerplatte 10, wie in den Figuren 6b und 6c dargestellt anschließend in eine rechtwinkelige Anordnung zur Drehachse 7 verkippt werden kann. Hierdurch kann eine besonders rasche Montage der Handbremse 6 gewährleistet werden.

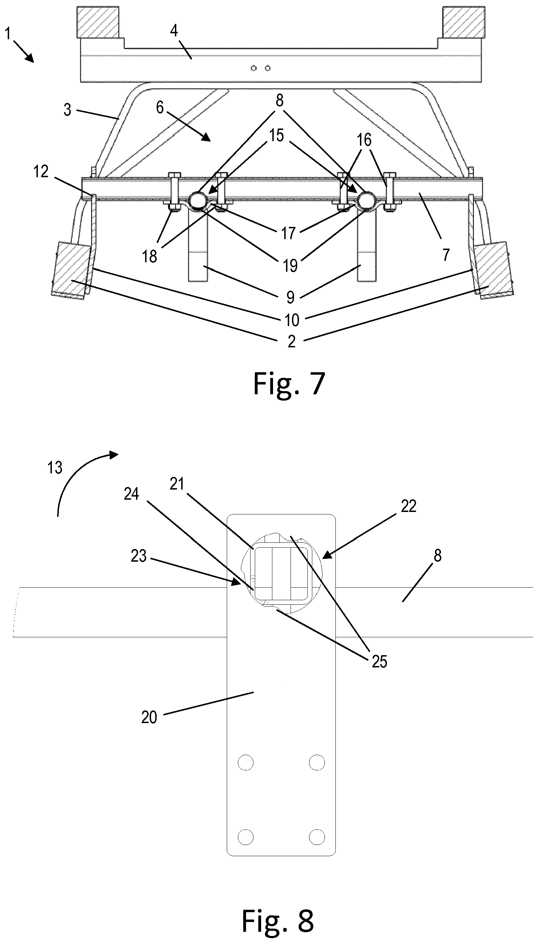

Figur 7 zeigt den Schlitten 1 gemäß Figur 1 und Figur 2, in einer Schnittdarstellung normal auf die Fahrtrichtung an der Position der Drehachse 7. Die Drehachse 7 weist in der in Figur 7 dargestellten Ausführungsvariante zwei zweite Ausnehmungen 15 auf, wobei der Handbremshebel 8 in den zweiten Ausnehmungen 15 positioniert ist. Hierdurch wird der Vorteil erreicht, dass die Handbremse 6 besonders kompakt ausgebildet ist, und eine große Kontaktfläche für eine Verbindung des Handbremshebels 8 und der Drehachse 7 bereitgestellt wird. Des Weiteren weist die Handbremse 6 in der bevorzugten Ausführungsform zumindest eine Rohrschelle 17 auf. In der in Figur 7 dargestellten Ausführungsvariante der Handbremse 6 mit zwei Lagerplatten 10 und zwei zweiten Ausnehmungen 15 weist die Handbremse 6 zwei Rohrschellen 17 auf. Die Rohrschellen 17 sind an der Drehachse 7 befestigt und überspannen die zweite Ausnehmung 15, wobei die Rohrschellen 17 den Handbremshebel 8 in den zweiten Ausnehmungen 15 der Drehachse 7 kraftschlüssig fixieren. Hierdurch wird der Vorteil erreicht, dass der Handbremshebel 8 starr mit der Drehachse 7 verbunden ist, ohne dass aufwändige Schweißarbeiten durchgeführt werden müssen. Des Weiteren ermöglicht diese Konstruktion die Anpassung der erfindungsgemäßen Handbremse 6 an unterschiedliche Schlitten 1. Gemäß einer alternativen Ausführungsvariante der erfindungsgemäßen Handbremse 6 kann der Handbremshebel 8 auch mit der Drehachse 7 in der zweiten Ausnehmung 15 verschweißt werden. Hierbei wird der Vorteil erreicht, dass durch die größere Kontaktfläche, welche zwischen dem Handbremshebel 8 und der Drehachse 7 durch die zweite Ausnehmung 15 bereitgestellt wird, eine wesentlich stabilere Schweißverbindung erreicht werden kann, als dies bei Punktschweißungen möglich ist. Die Handbremse 6 umfasst des Weiteren in der in Figur 7 dargestellten bevorzugten Ausführungsform vier Schraubverbindungen 18 und zwei Kunststoffpads 19. In der Ausführungsform mit einer Rohrschelle 17 umfasst die Handbremse 6 ein Kunststoffpad 19, welches zwischen der Rohrschelle 17 und dem Handbremshebel 8 positioniert ist. Für die feste Verbindung zwischen der Drehachse 7 und dem Handbremshebel 8 wird der Handbremshebel 8 in die beiden zweiten Ausnehmungen 15 eingelegt. Danach werden die Rohrschellen 17 und die Kunststoffpads 19 auf die herausragende Rohrhälften des Handbremshebels 8 aufgelegt, wobei die Schaumstoffpads 19 zwischen den Rohrschellen 17 und dem Handbremshebel 8 positioniert sind. Durch Anziehen der Schraubverbindungen 18 wird der Handbremshebel 8 zwischen den Rohrschellen 17 und der Drehachse 7 eingeklemmt. Die Klemmkraft ist zumindest so groß, dass trotz einwirkender Bremskräfte keine Verschiebung des Handbremshebels 8 relativ zur Drehachse 7 erfolgt. Durch die Kunststoffpads 19 wird der Vorteil erreicht, dass der Reibungskoeffizient zwischen Rohrschellen 17 und Handbremshebel 8 höher ist, als wenn die Rohrschellenhälften 14 und Handbremshebel 8 direkt aneinander liegen. Somit sind für die feste Verbindung kleinere Klemmkräfte notwendig. Es kann erwähnt werden, dass die Kunststoffpads 19 aus gummiartigen Werkstoffen wie EPDM oder Moosgummi gefertigt sind und eine gewisse Shorehärte aufweisen. Über die Shorehärte kann die Federrate der Kunststoffpads 19 definiert werden, wodurch der Vorteil erhalten ist, dass im Falle eines unbeabsichtigten Lösens einer Schraubenverbindung 18 eine gewisse Klemmkraft erhalten bleibt und in weiterer Folge die feste Verbindung zwischen Drehachse 7 und Handbremshebel 8 bestehen bleibt. Durch die lösbaren Schraubverbindungen 18 ist es möglich den Handbremshebel 8 frei zu verschieben und in der gewünschten Position zu fixieren. Dadurch ist der Vorteil erhalten, dass der Schwenkbereich durch die variable Positionierung und in weiterer Folge auch die Eingriffstiefe der Bremskrallen 10 einstellbar ist. Durch geringere Eingriffstiefen sinkt auch die Bremswirkung, wobei dem gegenüber aber der Vorteil besteht, dass bei Einsatz der Handbremse 6 die befahrene Rodelstrecke weniger Schaden nimmt. Gemäß einer weiteren Ausführungsvariante weist der Handbremshebel 8 einen in Figur 1 dargestellten Griffbereich 26 auf, welcher beispielsweise aus Kunststoff gefertigt ist. Der Griffbereich 26 kann beispielsweise als mit dem Handbremshebel 8 verbundenes Kunststoffrohr oder als Kunststoffummantelung des Handbremshebels 8 ausgeführt sein. Des Weiteren kann auch der gesamte Handbremshebel 8 aus Kunststoff gefertigt sein.

Figur 8 zeigt eine weitere Ausführungsvariante der Lagerplatte 20 und der Drehachse 21. In dieser Ausführungsvariante weist die Durchgangsöffnung 22 eine Verengung 23 auf, und die Drehachse 21 weist eine Aussparung 24 an der Position der Verengung 23 auf, wobei die Aussparung 24 die Verengung 23 aufnimmt. Des Weiteren weist die Durchgangsöffnung 22 zwei Anschläge 25 auf, die in die Durchgangsöffnung 22 ragen. Hierdurch wird der Vorteil erreicht, dass die Drehachse 21 ohne zusätzliche Fixierungsmechanismen und mit nur einer Lagerplatte 20 in axialer Richtung fixiert wird. Die Verengung 23 erstreckt sich über einen Winkelbereich von in etwa 90°. Bei der Einführung der Drehachse 21 in die Durchgangsöffnung 22 wird die Drehachse 21 in etwa um 90° verdreht, und danach in die in Figur 8 dargestellte Lage eingeschwenkt. Durch die Begrenzung des Schwenkbereiches der Handbremse 6 durch den beziehungsweise die Anschläge 25 wird verhindert, dass sich die Drehachse 21 im montierten Zustand der Handbremse 6 um mehr als diesen Winkelbereich verdreht, wodurch die axiale Fixierung der Drehachse 21 erhalten bleibt.

Die in Figur 8 dargestellte Drehachse 21 weist zudem keine erste Ausnehmung 14 auf, wie in der in Figur 3 und Figur 4 dargestellten Ausführungsform. Allerdings weist die Drehachse 22 in der dargestellten Ausführungsvariante einen im Wesentlichen viereckigen Querschnitt auf, sodass der Schwenkbereich der Drehachse 21 in der Durchgangsöffnung 22 durch die beiden Anschläge 25 begrenzt wird, da die Anschläge 25 bei einer Rotation der Drehachse 21 an den Umfang der Drehachse 21 anschlagen.

Es kann erwähnt werden, dass es vorteilhaft ist die erste Ausnehmung 14 der Drehachse 7 und/oder die Aussparung 24 der Drehachse 21 mittels der dem Fachmann bekannten Rohrlasertechnik zu fertigen. Hierbei wird die Drehachse 7 beziehungsweise 21 mit einem Laser bearbeitet, der die erste Ausnehmung 14 beziehungsweise die Aussparung 24 aus der Drehachse 7 beziehungsweise 21 herausschneidet. Hierdurch kann die Form der Öffnung in der Drehachse besonders genau realisiert und auch aus relativ dickem Material zuverlässig herausgeschnitten werden.

## Patentansprüche

1. Handbremse (6) für einen Schlitten (1) mit einem Handbremshebel (8), einer Drehachse (7, 21), einer Bremskralle (9) und zumindest einer starr mit dem Schlitten (1) verbindbaren Lagerplatte (10, 20), wobei der Handbremshebel (8) mit der Drehachse (7, 21) und der Bremskralle (9) verbunden ist und die Drehachse (7, 21) an der Lagerplatte (10, 20) drehbar gelagert ist,
**dadurch gekennzeichnet, dass**
die Lagerplatte (10, 20) eine Durchgangsöffnung (11, 22) mit einem in die Durchgangsöffnung (11, 22) ragenden Anschlag (12, 25) aufweist, wobei die Drehachse (7, 21) in der Durchgangsöffnung (11, 22) aufgenommen ist, und der Anschlag (12, 25) an der Drehachse (7, 21) in einer vorzugsweise entgegen einer Betätigungsrichtung (13) der Handbremse (6) gerichteten Drehbewegung der Drehachse (7, 21) anschlägt.

2. Handbremse (6) gemäß Anspruch 1, **dadurch gekennzeichnet, dass** die Drehachse (7) eine erste Ausnehmung (14) aufweist, und der Anschlag (12) in die erste Ausnehmung (14) eingreift.

3. Handbremse (6) gemäß Anspruch 2, **dadurch gekennzeichnet, dass** die erste Ausnehmung (14) in Richtung eines Endes der Drehachse (7) geöffnet ist.

4. Handbremse (6) gemäß Anspruch 2, **dadurch gekennzeichnet, dass** die erste Ausnehmung (14) einen geschlossenen Umfang aufweist, und von Enden der Drehachse (7) beabstandet ist.

5. Handbremse (6) gemäß Anspruch 4, **dadurch gekennzeichnet, dass** das der Ausnehmung (14) nächstliegende Ende der Drehachse (7) eine der Ausnehmung (14) im Wesentlichen gegenüberliegende Abfasung (27) aufweist.

6. Handbremse (6) gemäß Anspruch 1, **dadurch gekennzeichnet, dass** die Durchgangsöffnung (22) eine Verengung (23) aufweist und die Drehachse (21) eine Aussparung (24) an der Position der Verengung (23) aufweist, wobei die Aussparung (24) die Verengung (23) aufnimmt.

7. Handbremse (6) gemäß einem der Ansprüche 1 bis 6, **dadurch gekennzeichnet, dass** die Drehachse (7, 21) einen im Wesentlichen viereckigen Querschnitt aufweist.

8. Handbremse (6) gemäß einem der Ansprüche 1 bis 7, **dadurch gekennzeichnet, dass** die Drehachse (7, 21) eine zweite Ausnehmung (15) aufweist, und der Handbremshebel (8) in der zweiten Ausnehmung (15) positioniert ist.

9. Handbremse (6) gemäß Anspruch 8, **dadurch gekennzeichnet, dass** die Handbremse (6) zumindest eine Rohrschelle (17) aufweist, wobei die Rohrschelle (17) an der Drehachse (7, 21) befestigt ist und die zweite Ausnehmung (15) überspannt, wobei die Rohrschelle (17) den Handbremshebel (8) in der zweiten Ausnehmung (15) der Drehachse (7, 21) kraftschlüssig fixiert.

10. Handbremse (6) gemäß Anspruch 9, **dadurch gekennzeichnet, dass** die Handbremse (6) ein Kunststoffpad (19) aufweist, welches zwischen der Rohrschelle (17) und dem Handbremshebel (8) positioniert ist.

11. Handbremse (6) gemäß einem der Ansprüche 2 bis 10, wenn abhängig von Anspruch 2 beziehungsweise von Anspruch 6, **dadurch gekennzeichnet, dass** die erste Ausnehmung (14) beziehungsweise die Aussparung (24) der Drehachse (7; 21) mittels Rohlasertechnik gefertigt wurde.

12. Schlitten (1) mit einer Handbremse (6) gemäß einem der Ansprüche 1 bis 11, **dadurch gekennzeichnet, dass** der Schlitten (1) zumindest einen Anschlagsbereich aufweist, und der Handbremshebel (8) in der Betätigungsrichtung (13) der Handbremse (6) an den Anschlagsbereich anschlägt.

13. Schlitten (1) gemäß Anspruch 12, **dadurch gekennzeichnet, dass** der Schlitten (1) zumindest eine normal zu einer Fahrtrichtung des Schlittens (1) orientierte Querstrebe (4) aufweist, und der Anschlagsbereich auf der Querstrebe (4) angeordnet ist.

## Claims

1. A hand brake (6) for a sled (1) having a hand brake lever (8), a rotating shaft (7, 21), a braking claw (9), and at least one bearing plate (10, 20) rigidly connectable to the sled (1), the hand brake lever (8) being connected with the rotating shaft (7, 21) and the braking claw (9) and the rotating shaft (7, 21) being pivotably supported on the bearing plate (10, 20),
**characterized in that**
the bearing plate (10, 20) has a passage opening (11, 22) with a stopper (12, 25) extending into the passage opening (11, 22), the rotating shaft (7, 21) being received in the passage opening (11, 22) and the stopper (12, 25) touching the rotating shaft (7, 21) in a rotational movement of the rotating shaft (7, 21) preferably against an actuation direction (13) of the hand brake (6).

2. The hand brake (6) according to claim 1, **characterized in that** the rotating shaft (7) has a first recess (14) and the stopper (12) engages in the first recess (14).

3. The hand brake (6) according to claim 2, **characterized in that** the first recess (14) is opened in the direction of an end of the rotating shaft (7).

4. The hand brake (6) according to claim 2, **characterized in that** the first recess (14) has a closed circumference and is spaced from ends of the rotating shaft (7).

5. The hand brake (6) according to claim 4, **characterized in that** the end of the rotating shaft (7) closest to the recess (14) has a beveling (27) substantially opposite of the recess (14).

6. The hand brake (6) according to claim 1, **characterized in that** the passage opening (22) has a constriction (23) and the rotating shaft (21) has an opening (24) at the position of the constriction (23), the opening (24) receiving the constriction (23).

7. The hand brake (6) according to any one of the claims 1 to 6, **characterized in that** the rotating shaft (7, 21) has a substantially square cross-section.

8. The hand brake (6) according to any one of the claims 1 to 7, **characterized in that** the rotating shaft (7, 21) has a second recess (15) and the hand brake lever (8) is positioned in the second recess (15).

9. The hand brake (6) according to claim 8, **characterized in that** the hand brake (6) has at least one pipe clamp (17), the pipe clamp (17) being mounted on the rotating shaft (7, 21) and spanning the second recess (15), the pipe clamp (17) fixing the hand brake (8) in the second recess (15) of the rotating shaft (7, 21) in a force-locked manner.

10. The hand brake (6) according to claim 9, **characterized in that** the hand brake (6) has a plastic pad (19), which is positioned between the pipe clamp (17) and the hand brake lever (8).

11. The hand brake (6) according to any one of the claims 2 to 10, if depending on claim 2 or claim 6, respectively, **characterized in that** the first recess (14) or the opening (24) of the rotating shaft (7, 21), respectively, have been manufactured via pipe laser technique.

12. A sled (1) having a hand brake (6) according to any one of the claims 1 to 11, **characterized in that** the sled (1) has at least one stopper area and the hand brake lever (8) touches the stopper area in the actuation direction (13) of the hand brake (6).

13. The sled (1) according to claim 12, **characterized in that** the sled (1) has at least one cross brace (4) oriented normally to a travel direction of the sled (1) and the stopper area is arranged on the cross brace (4).

## Revendications

1. Frein à main (6) pour luges (1) comprenant un levier de frein à main (8), un axe de rotation (7, 21), une griffe de frein (9) et au moins une plaque d'appui (10, 20) pouvant être assemblée de façon rigide à la luge (1), dans lequel le levier de frein à main (8) est relié à l'axe de rotation (7, 21) et à la griffe de frein (9), et l'axe de rotation (7, 21) est monté de façon rotative sur la plaque d'appui (10, 20), **caractérisé en ce que** la plaque d'appui (10, 20) comporte une ouverture de passage (11, 22), avec une butée (12, 25) qui pénètre dans l'ouverture de passage (11, 22), dans lequel l'axe de rotation (7, 21) est logé dans l'ouverture de passage (11, 22), et la butée (12, 25) bute sur l'axe de rotation (7, 21) dans un mouvement de rotation de l'axe de rotation (7, 21) dirigé dans le sens inverse d'une direction d'actionnement (13) du frein à main (6).

2. Frein à main (6) selon la revendication 1, **caractérisé en ce que** l'axe de rotation (7) présente un premier évidement (14), et la butée (12) s'engage dans le premier évidement (14).

3. Frein à main (6) selon la revendication 2, **caractérisé en ce que** le premier évidement (14) est ouvert en direction d'une extrémité de l'axe de rotation (7).

4. Frein à main (6) selon la revendication 2, **caractérisé en ce que** le premier évidement (14) présente un pourtour fermé, et est espacé des extrémités de l'axe de rotation (7).

5. Frein à main (6) selon la revendication 4, **caractérisé en ce que** l'extrémité de l'axe de rotation (7) la plus proche de l'évidement (14) présente un chanfrein (27) essentiellement opposé à l'évidement (14).

6. Frein à main (6) selon la revendication 1, **caractérisé en ce que** l'ouverture de passage (22) présente un étranglement (23) et l'axe de rotation (21) comporte une découpe (24) à la position de l'étranglement (23), dans lequel la découpe (24) contient l'étranglement (23).

7. Frein à main (6) selon l'une quelconque des revendications 1 à 6, **caractérisé en ce que** l'axe de rotation (7, 21) présente une section transversale essentiellement carrée.

8. Frein à main (6) selon l'une quelconque des revendications 1 à 7, **caractérisé en ce que** l'axe de rotation (7, 21) présente un second évidement (15) et le levier de frein à main (8) est positionné dans le second évidement (15).

9. Frein à main (6) selon la revendication 8, **caractérisé en ce que** le frein à main (6) présente au moins un collier tubulaire (17), dans lequel le collier tubulaire (17) est fixé à l'axe de rotation (7, 21) et recouvre le second évidement (15), dans lequel le collier tubulaire (17) fixe le levier de frein à main (8) dans le second évidement (15) de l'axe de rotation (7, 21).

10. Frein à main (6) selon la revendication 9, **caractérisé en ce que** le frein à main (6) présente un tampon en matière plastique (19) qui est positionné entre le collier tubulaire (17) et le levier de frein à main (8).

11. Frein à main (6) selon l'une quelconque des revendications 2 à 10, lorsqu'elles dépendent de la revendication 2 ou de la revendication 6, **caractérisé en ce que** le premier évidement (14) ou la découpe (24) de l'axe de rotation (7; 21) a été fabriqué(e) au moyen d'une technique au laser brut.

12. Luge (1) comprenant un frein à main (6) selon l'une quelconque des revendications 1 à 11, **caractérisée en ce que** la luge (1) présente au moins une zone de butée et le levier de frein à main (8) bute sur la zone de butée dans la direction d'actionnement (13) du frein à main (6).

13. Luge (1) selon la revendication 12, **caractérisée en ce que** la luge (1) présente au moins une entretoise transversale (4) orientée normalement à une direction de déplacement de la luge (1) et la zone de butée est disposée sur l'entretoise transversale (4).
